Europäisches Patentamt

European Patent Office

Office européen des brevets

(11) Publication number: **0 177 434 B1**

# EUROPEAN PATENT SPECIFICATION

(45) Date of publication of patent specification: **08.07.92**  (51) Int. Cl.⁵: **B01D 29/46**

(21) Application number: **85630160.1**

(22) Date of filing: **03.10.85**

The file contains technical information submitted
after the application was filed and not included in
this specification

(54) **Multiple-disc filter.**

(30) Priority: **04.10.84 IL 73164**

(43) Date of publication of application:
**09.04.86 Bulletin 86/15**

(45) Publication of the grant of the patent:
**08.07.92 Bulletin 92/28**

(84) Designated Contracting States:
**AT BE CH DE FR GB IT LI NL SE**

(56) References cited:
AU-B- 30 313          DE-C- 665 591
GB-A- 300 600         GB-A- 334 569
GB-A- 1 096 739       US-A- 1 849 042
US-A- 1 926 557       US-A- 2 583 423
US-A- 3 037 633

(73) Proprietor: **Rosenberg, Peretz**

**Moshav Beit Shearim(IL)**

(72) Inventor: **Rosenberg, Peretz**

**Moshav Beit Shearim(IL)**

(74) Representative: **Weydert, Robert et al
OFFICE DENNEMEYER S.à.r.l. P.O. Box 1502
L-1015 Luxembourg(LU)**

# Description

Multiple-disc filters are gaining increasing use in various applications, for example in water irrigation systems for removing foreign particles which may clog the water irrigation devices. Such filters include a stack of filter discs formed with ribbed side faces such as to form narrow filtering channels between the discs when arranged in a stack. Some of the dirt particles are removed and retained at the upstream face of the filter stack facing the filter inlet, the finer dirt particles entering the spaces between the discs being removed and retained in the narrow filtering channels between the discs.

A known multiple-disc filter of this type is disclosed in GB-A-300,600. The known filter comprises a multiple-disc fluid filter, comprising a housing having an inlet and an outlet, and a plurality of discs supported in a stack and having inlet edges facing the inlet, outlet edges facing the outlet, and confronting side faces; one side face of each pair of confronting side faces being formed with a sinuously extending rib having intermediate rib portions joined by bridges at the inlet edge of the disc, and bridges at the outlet edge of the disc, to define a group of inlet flow passages communicating with said inlet, and a group of outlet flow passages alternating with said inlet flow passages and communicating with said outlet; and spacing means spacing the other side of each pair of confronting side faces from said sinuously extending rib to define filtering passages between each pair of confronting side faces;

Reference is also made to US-A-2,583,423 which discloses in Figs. 6-8 a filter disc having a flat face on one side and narrow radially oriented inlet and outlet grooves formed in the opposite side which is also provided with circumferentially discontinuous spacers to space the opposite side of the filter disc from the flat side of an adjacent filter disc in a stack of filter discs.

The object of the present invention is to provide a filter of the type described and which has less susceptibility to clogging, can be more effectively cleaned in a quick and simple manner without disassembling it, and has an increased dirt-removing and dirt-holding capacity.

According to the present invention, to achieve this, the multiple-disc filter is characterized in that said spacing means comprises at least two spaced, continuous, further ribs provided on the other side face of each of said pair of confronting side faces; one of said further ribs being located adjacent to but spaced from the inlet edge of the disc, and the other of said further ribs being located adjacent to but spaced from the outlet edge of the disc; said sinuously-extending rib and said further ribs being very thin and the intermediate portions of said sinuously extending rib crossing said further ribs substantially perpendicularly so as to make substantial point contacts with each other; the spaces between the further ribs and the intermediate portions of the sinuous rib defining filtering passageways of very small surface area having a low sensitivity to clogging, a high capability of cleaning without disassembling the filter, and that said further ribs are of a substantially smaller height than said sinuously extending rib such that said filtering passageways are of substantially smaller height than the height of said first and second flow passages which passages have thus a high dirt-holding capacity.

Advantageous embodiments of the multiple-disc filter are recited in the dependent claims.

The multiple-disc filter is herein described, by way of example only, with reference to the accompanying drawings, wherein:

Fig. 1 is a longitudinal sectional view illustrating one form of filter constructed in accordance with the present invention;

Figs. 2a and 2b are top and bottom plan views, respectively, illustrating the opposite faces of the filter discs in the filter of Fig. 1;

Fig. 3 is an enlarged sectional view illustrating the assembly of two adjacent discs in the filter of Fig. 1;

Figs. 4a and 4b are side elevational, and top plan views, respectively, illustrating the end disc at one end of the stack in the filter of Fig. 1;

Figs. 5a and 5b are side-elevational, and top plan views, respectively, illustrating the end disc at the opposite end of the stack in the filter of Fig. 1;

Fig. 6 is a sectional view illustrating another filter in accordance with the present invention including a plurality of filter discs alternating with a plurality of spacer discs;

Fig. 7 is a top plan view illustrating the construction of the filter discs in the filter of Fig. 6, Fig. 7a being a section along lines a--a thereof;

Fig. 8 is a plan view illustrating the construction of the spacer discs in the filter of Fig. 6, Fig. 8a being a sectional view along lines a--a of Fig. 8;

Fig. 9 diagrammatically illustrates the filtering passageways formed by the contacting faces of the discs in the filter construction of Fig. 11; and

Fig. 10 illustrates a further variation in the construction of a multiple-disc filter in accordance with the present invention.

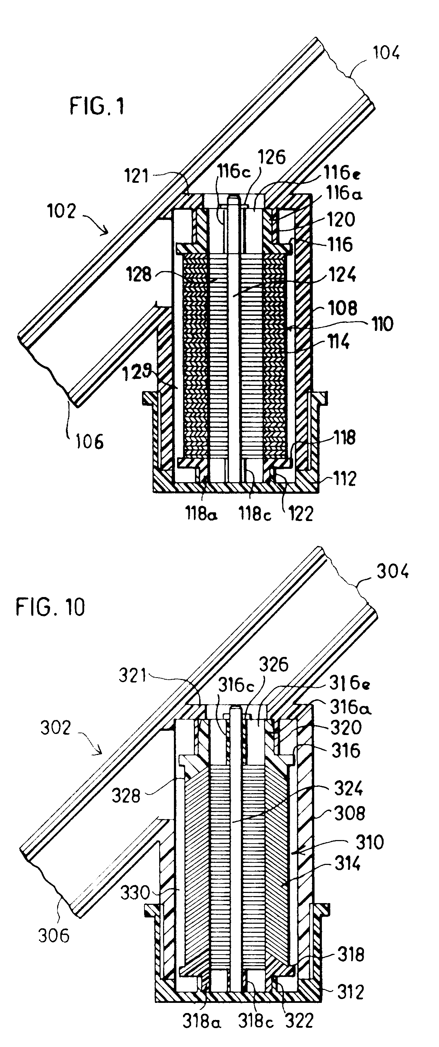

The filter illustrated in Fig. 1 comprises a housing, generally designated 102, having an inlet 104 connectable to the upstream water supply pipe, and an outlet 106 connectable to the downstream water supply pipe. Housing 102 further includes an intermediate cylindrical section 108 in which is disposed a filter body, generally designated 110, which removes the solid particles in the irrigating water so that the water flowing via the outlet 106 to the irrigating devices connected to the downstream water supply line will be substantially free of such particles. Cylindrical housing section 108 is integrally formed at its upper end with the housing inlet 104 and housing outlet 106, and is closed at its bottom by a threaded cap 112.

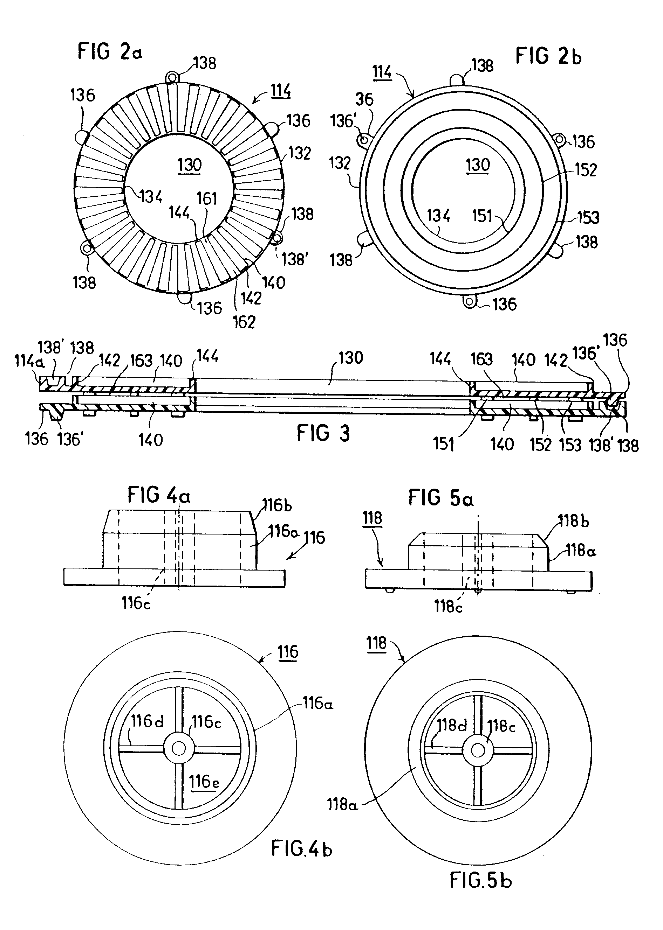

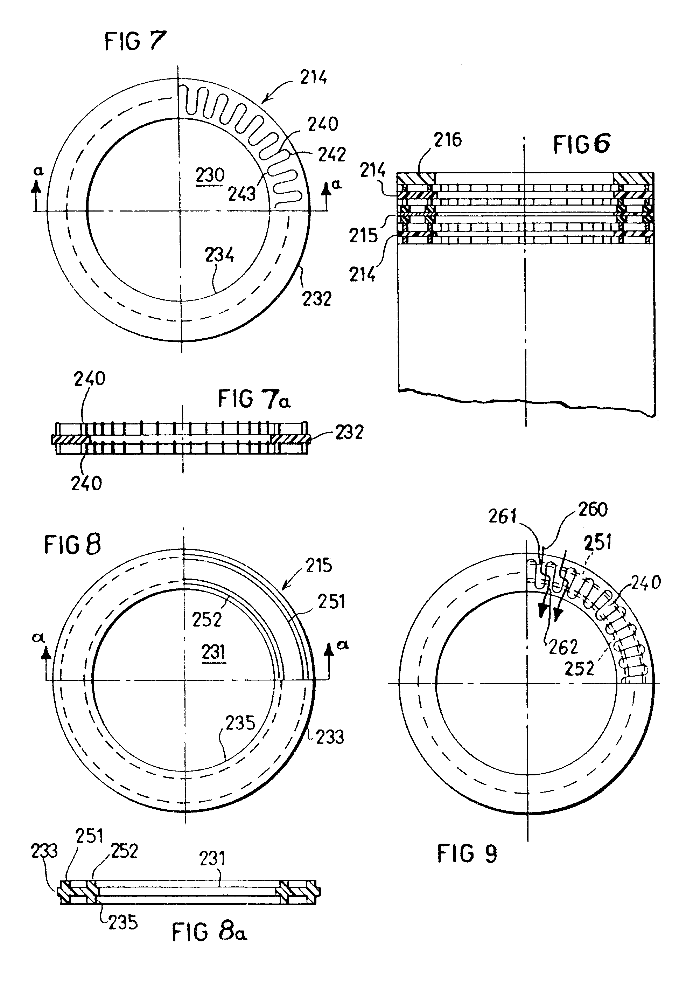

Filter body 110 is constituted of a stack of filter discs 114 secured between a pair of end discs 116 and 118. End disc 116, more particularly illustrated in Figs. 4a and 4b, is integrally formed with a central tubular section 116a tapered at its outer tip 116b to facilitate its reception within a sleeve 120 integrally formed in an apertured wall 121 in housing 102. End disc 118, more particularly illustrated in Figs. 5a and 5b, is also integrally formed with a central tubular section 118a tapered at its outer tip 118b to facilitate its reception within a cylindrical sleeve 122 integrally formed in end cap 112.

Each of the end discs 116, 118, further includes a tubular sleeve 116c, 118c, supported centrally of the respective disc by four radial arms 116d, 118d. A reinforcement rod 124 (e.g. of metal) extends axially through central sleeves 116c, 118c, and the filter discs 114, and firmly secures the discs in a stack as shown in Fig. 1. Rod 124 may be fixed to the end discs 116, 118, in any suitable manner, for example by being threaded at one end into end disc 118, and receiving at its opposite end a threaded nut 126.

The spaces 116e between the radial ribs 116d in end disc 116 serve as inlet openings for the water. The water is introduced via inlet 104, passes through openings 116e into the inner passageway 128 in filter body 110, radially outwardly through the filter body into the annular passageway 129 between the filter body and the inner face of housing section 108, and out through the outlet 106.

Each filter disc 114 is of annular configuration, being formed with a large central opening 130 defining an outer circular edge 132 and an inner circular edge 134. Each disc further includes a plurality of tabs 136, 138 projecting from its outer edge. Some tabs 136 are formed with plugs and other tabs 138 are formed with complementary sockets. In the construction illustrated in Figs. 2a and 2b, each filter disc 114 includes three tabs 136 formed with plugs 136' projecting from one face of the disc, and three tabs 138 formed with sockets 138' projecting from the opposite face of the disc and spaced between the plug tabs 136, such that a plurality of the discs may be assembled together into the form of a stack by merely inserting the plugs of one disc into the sockets of the next adjacent one as shown in Fig. 3.

Fig. 2a illustrates one face of each filter disc 114, and Fig. 2b illustrates the opposite face.

Each filter disc 114 is formed with grooves extending only partially through the thickness of the disc such as to define a continuous, non-apertured surface on one face (that illustrated in Fig. 2b), and a plurality of spaced ribs 140 projecting from the opposite face (that illustrated in Fig. 2a). Ribs 140 have straight line edges and extend in the radial direction from the outer edge 132 to the inner edge 134 so as to be substantially parallel to each other. The outer end of each rib is joined by a bridge 142 to the next adjacent rib at one side thereof, and the inner end of each rib is joined by a second bridge 144 to the next adjacent rib at the opposite side thereof. Ribs 140 and bridges 142, 144 thus define a continuous sinuously-extending rib constituted mostly of sections extending in the radial direction (ribs 140), but having short circumferentially-extending junctures (bridges 142, 144) at the outer and inner edges of the filter disc.

The opposite face of each filter disc 114, as illustrated in Fig. 2b, is formed with three annular ribs 151, 152, 153 coaxially disposed with respect to each other, such that the inner rib 151 is adjacent to the inner edge 134 of the disc, the outer rib 153 is adjacent to the outer edge 132 of the disc, and the intermediate rib 152 is substantially midway between ribs 151 and 153.

The discs 114 are assembled together in a stack to form the cylindrical filter body 110 illustrated in Fig. 1 by placing one face (Fig. 2a) of each disc in contact with the opposite face (Fig. 2b) of the next adjacent disc, with the plugs 136' in tabs 136 of one disc 114a (Fig. 3) received within the sockets 138' of the next adjacent disc 114b. It will be seen that when the discs are so assembled, annular ribs 151, 152, 153 extend substantially perpendicularly to the radial ribs 140 of the next adjacent disc.

This arrangement thereby defines the following: a first group of recesses 161 (Fig. 2a) between ribs 140 open at the inner edges 134 of the discs and thereby communicating with the filter inlet via central passageway 128; and a second group of recesses 162, alternating with recesses 161, and open at the outer edges 132 of the discs, and thereby communicating with the filter outlet 106 via the outer annular passageway 130. Communication is established between the two groups of recesses by a plurality of filtering passageways 163 (Fig 3) between the outer faces of the radial ribs 140 of one disc (114a, Fig. 3) and the annular ribs 151, 152, 153 of the next adjacent disc (114b, Fig. 3).

As seen particularly in Fig. 3, annular ribs 151, 152 and 153 formed on one face of each disc 114 are of smaller height than the radial ribs 140 formed on the opposite face of the disc; thus, the filtering passageways 163 defined by these contacting ribs are of smaller height than recesses 161 and 162 between the radial ribs 140. In addition the thickness of the annular ribs 151, 152 and 153 is very small and their spacing is substantially larger than the spacing between the radial ribs 140; thus, the filtering passageways 163 are substantially longer than their widths and extend for substantially the complete lengths of the radial ribs 140.

The filter illustrated in Figs. 1-5b may be used in the following manner:

The filter body 110 is conveniently assembled outside of housing section 108 by merely inserting the plugs 136' of one disc 114 into the sockets 138' of the next adjacent disc until a stack of the desired number of discs is produced. The end discs 116 and 118 are applied to the opposite ends of the stack, and all the discs are firmly secured together by passing reinforcement rod 124 through central tubes 116c, 118c of the end discs and fixing the opposite ends of the rod thereto. The so assembled stack of filter discs is inserted into cylindrical section 108 of the housing, and end cap 112 of the housing is applied to close the lower end of the housing section .

As a pressurized fluid, e.g. irrigation water, is introduced via the housing inlet 104, the water passes through openings 116e in end disc 116 into the inner passageway 128 of the filter body 110. As described earlier, in the assembled condition of the filter discs 114, annular ribs 151, 152 153 on one face of each disc firmly contact the radial ribs 140 on the confronting face of the next adjacent disc, to define the plurality of recesses 161 communicating with the inner passageway 128 and thereby with the filter inlet 104, the plurality of recesses 162 communicating with the outer annular passageway 130 and thereby with the outlet 106, and the filtering passageways 163 between the annular ribs 151, 152, 153 and the radial ribs 140.

It will thus be seen that the illustrated filter provides two degrees of filtration, namely coarse filtration defined by the spacing between the radial ribs 140 which block out coarse particles, and fine filtration defined by the height of the annular ribs 151, 152, 153 which block out fine particles. The height of annular ribs, 151, 152, 153 can be varied according to the fine filtration desired. As one example, these ribs may have a height of 0.15 mm which produces approximately a 100-mesh filtration.

It will be particularly noted that the fine particles are removed in the passageways 163 between annular ribs 151, 152, 153, which passageways extend for substantially the complete length of the radial ribs 140. Thus, the illustrated filter has a very high capacity for removing and retaining large quantities of solid particles before cleaning is required. Cleaning may be done by reverse-flushing, or by removing end cap 112 and the stack of filter discs 114, and then rinsing the discs.

In the embodiment of Figs. 6-9, instead of providing the stack with discs of all the same construction, the stack is provided with two types of discs, one type being filter discs formed with the sinuous ribs, and the other type being spacer discs formed with the spacer ribs and alternating with the first type of discs. Such an arrangement provides a number of important advantages. Thus, the filter discs formed with the sinuous ribs on both faces may be of standardized construction and dimensions for all filter-mesh sizes, the filter-mesh size being determined by the dimensions of the ribs in the spacer discs; that is, the spacer discs would have ribs of larger height to define larger filtering passageways for coarse-mesh filters, and ribs of shorter height to define smaller passageways of fine-mesh filters. This enables considerable savings to be made not only in inventory costs, but also in development, tooling and manufacturing costs. Another advantage in this construction is that the assembling of the filter is much simpler and less prone to mistakes since the disc can be introduced with either face facing outwardly, it only being necessary to alternate the two types of discs when assembling the filter stack. A still further advantage is that the spacer discs may be made of, or may include, special chemical materials, for example carbon to absorb odors and the like.

The filter stack illustrated in Fig. 6 comprises a plurality of filter discs 214 shown in Figs. 7 and 7a, alternating with a plurality of spacer discs 215 shown in Figs. 8 and 8a. Both types of discs are of annular configuration, each being formed with a large central opening 230, 231, defining an outer circular edge 232, 233, and an inner circular edge 234, 235.

Disc 214 is formed on both its faces with a sinuous projection or rib 240 progressing completely around the circumference of the disc. Fig. 7 illustrates sinuous rib 240 as occupying only one-fourth of the disc, but it will be appreciated that it is shown thus for simplification purposes and that the sinuous rib actually extends completely around the circumference on both of its faces.

Sinuous rib 240 formed on both faces of disc 214 is constituted mostly of straight sections extending radially of the disc. These straight sections are joined by short junctures or bridge sections 242 adjacent to the outer edge of the disc, and by further junctures or bridges 243 adjacent to the inner edge of the disc, to produce the sinuous configuration.

Each of the spacer discs 215, as illustrated in Figs. 8 and 8a, is formed with a pair of annular ribs 251, 252, on both of its faces. Thus, annular rib 251 is adjacent to the outer edge 233 of the disc, and annular rib 252 is adjacent to its inner edge 235. Although Fig. 8 illustrates ribs 250 extending only for one-fourth the circumference of disc 215, it will be appreciated that these ribs extend for the complete circumference of the disc on both of its opposite faces.

Fig. 6 illustrates the filter stack as including a plurality of the filter discs 214 alternating with a plurality of the spacer discs 215, such that the sinuous rib 240 on each of the two faces of disc 214 always contacts the two annular ribs 251, 252 on the confronting face of the spacer discs 215. The plurality of discs are retained in a stack by an end disc 216 at one end of the stack, the opposite end including a similar end disc.

Fig. 9 diagrammatically illustrates the filter passageways formed by the contacting faces of discs 214 and 215 in the stack illustrated in Fig. 6. Assuming the outer face of the stack constitutes the upstream surface, i.e. facing the filter inlet, it will seen that the flow of the water (or other fluid) through the stack will be as shown by the arrows 260 in Fig. 9. Thus, the contacting faces of the sinuous ribs 240 on discs 214, and the annular ribs 251, 252 on discs 215, will produce a first group of recesses 261 open at the outer edges of the discs and thereby communicating with the filter inlet, and a second group of recesses 262, alternating with recesses 261, and open at the inner edges of the discs and thereby communicating with the filter outlet via the central passageway defined by disc openings 230, 231. Communication is established between these two groups of recesses by the plurality of filtering passageways between the radial sections of the sinuous ribs 240 of the filter discs 214, and the annular ribs 251, 252 of the spacer discs 215.

The filter illustrated in Fig. 10 may be basically of the same overall construction as that in any of the above-described embodiments, except that instead of using discs of planar configuration, the illustrated filter uses discs of tapered configuration, particularly of frusto-conical configuration, which are nestably received within each other.

Thus, the illustrated filter comprises a housing 302 having an inlet 304, an outlet 306, and an intermediate cylindrical section 308 in which is disposed a filter body 310, the bottom of housing section being 308 being closed by a threaded cap 312. Filter body 310 is constituted of a stack of filter discs 314 secured between a pair of end discs 316, 318. End disc 316 is integrally formed with a central tubular section 316a tapered at its outer tip to facilitate its reception within a sleeve 320 integrally formed in an apertured wall 321 in housing 302. End disc 318 is also integrally formed with a central tubular section 318a tapered at its outer top to facilitate its reception within a cylindrical sleeve 322 integrally formed in end cap 312. Each of the end discs 316, 318 further includes a tubular sleeve 316c, 318c, supported centrally of the respective disc by four radial arms defining passageways, e.g. 316e. A reinforcement rod extends axially through sleeves 316c, 318c and the filter discs 314, and firmly secures the discs in a stack. Rod 324 is fixed to end disc 318 and receives a threaded nut 326 at its opposite end for fixing same to disc 316.

In the filter illustrated in Fig. 10, the discs are of tapered configuration from their outer edges to their inner edges and are nestably received within each other. They therefore support each other within the stack. In addition, this configuration of the discs increases the area of the contacting faces between the discs, thereby increasing the filtering capacity for a given size unit.

Further, by disposing the stack of discs in a vertical position as illustrated in Fig. 10, with the inlet edges of the contacting surfaces of the discs above their outlet edges, the coarse dirt particles in the fluid separated at the inlet edges of the discs tend to fall to the bottom of the housing. In the illustrated arrangement, the outer edges of the discs 314 are at the outlet side of the stack 310 and are therefore lower than the inner edges of the discs, constituting the inlet side of the stack. Accordingly, the coarse dirt particles will tend to fall by gravity on top of threaded cap, and therefore may be conveniently removed by merely removing the cap, or by providing a dirt purging outlet through the cap.

Preferably, the filter discs 314 are of frusto-conical configuration forming an angle of 30°-60° with respect to the longitudinal axis of the stack 310. A preferred angle is 45°. The two end discs 316 and 318 are preferably also of the same frusto-conical configuration.

The contacting faces of the discs are formed with ribs and recesses of any desired configuration, such as in the above-described embodiments, in order to provide the proper filtering passageways for the fluid flowing from the housing inlet 304 to the housing outlet 306. Preferably, the discs are constructed of flexible material to enable them to flex and close any gaps between their contacting faces when tightened by nut 326, in order to preclude channeling of the fluid because of dimensional imprecisions.

## Claims

1. A multiple-disc fluid filter, comprising a housing (102; 302) having an inlet (104; 304) and an outlet (106; 306), and a plurality of discs (114; 214, 215; 314) supported in a stack and having inlet edges facing the inlet, outlet edges facing the outlet, and confronting side faces; one side face of each pair of confronting side faces being formed with a sinuously extending rib (140, 142, 144; 240) having intermediate rib portions (140) joined by bridges (142) at the inlet edge of the disc, and bridges (144) at the outlet edge of the disc, to define a group of inlet flow passages (161) communicating with said inlet (104), and a group of outlet flow passages (162) alternating with said inlet flow passages and communicating with said outlet (106); and spacing means spacing the other side of each pair of confronting side faces from said sinuously extending rib (140, 142, 144; 240) to define filtering passages (163) between each pair of confronting side faces; characterized in that said spacing means comprises at least two spaced, continuous, further ribs (151, 152, 153, 251, 252) provided on the other side face of each of said pair of confronting side faces; one of said further ribs (151, 152, 153; 251, 252) being located adjacent to but spaced from the inlet edge of the disc, and the other of said further ribs being located adjacent to but spaced from the outlet edge of the disc; said sinuously-extending rib (140, 142, 144, 240) and said further ribs (151, 152, 153; 251, 252) being very thin and the intermediate portions of said sinuously extending rib crossing said further ribs substantially perpendicularly so as to make substantial point contacts with each other; the spaces between the further ribs and the intermediate portions of the sinuous rib defining filtering passageways (163) of very small surface area having a low sensitivity to clogging, a high capability of cleaning without disassembling the filter, and that said further ribs (151, 152, 153; 251, 252) are of a substantially smaller height than said sinuously extending rib (140, 142, 144; 240) such that said filtering passageways (163) are of substantially smaller height than the height of said inlet and outlet flow passages (161, 162) which passages (161,162) have thus a high dirt-holding capacity.

2. The filter according to claim 1, wherein said further ribs (151, 152, 153; 251, 252) are spaced from each other a substantially larger distance than the spacing of said intermediate rib portions (140) from each other such that the length of each of said filtering passageways (163) is substantially longer than its width.

3. Filter according to claim 2, wherein said discs (114, 214, 215, 314) and said further ribs (151, 152, 153; 251, 252) thereon are both of annular shape, said intermediate rib portions (140) extending in the radial direction of the respective disc, and said bridges (142, 144) extending in the circumferential direction of the respective disc.

4. Filter according to any one of claims 1-3, wherein each of said discs (114) includes a plurality of tabs (136, 138) projecting from an outer edge (132) thereof and formed with complementary plugs (136') and sockets (138') enabling a plurality of said discs (114) to be assembled in a stack by inserting the plugs (136') of one disc (114) into the sockets (138') of the next adjacent disc (114).

5. Filter according to any one of claims 1-4, wherein all said discs (114, 314) of the stack are of identical construction, each disc being formed with said sinuously extending rib (140, 142, 144) on one face and said plurality of further ribs (151, 152, 153) projecting from said opposite face.

6. Filter according to any one of claims 1-4, wherein said stack includes two types of discs (214, 215) alternating with each other in the stack, one type being filter discs (214) formed with said sinuously extending rib (240) on both its faces, the other type being spacer discs (215) formed with said further ribs (251, 252) on both its faces.

7. The filter according to any one of claims 1-6, wherein all said discs (314) of the stack (310) are formed with a central aperture and are of tapered configuration from their outer edges to their inner edges, said discs (314) being nestably received within each other, thereby increasing the self-stability of the stack (310) of discs (314) and also increasing the area of the confronting faces between said discs (314) as compared to discs of planar configuration.

8. The filter according to claim 7, wherein said stack (310) of discs (314) are disposed in a vertical position during normal use of the filter with the inlet edges of the confronting faces of said discs (314) being above their outlet edges, whereby coarse dirt particles in the fluid separated at the inlet edges of said discs (314) tend to fall to the bottom of the filter.

**Revendications**

1. Filtre à disques multiples pour un fluide, comprenant un carter (102;302) ayant un orifice d'entrée (104;304) et un orifice de sortie (106;306), et une pluralité de disques (114;214,215;314) supportés sous la forme d'une pile et ayant des bords d'entrée tournés vers l'orifice d'entrée, des bords de sortie tournés vers l'orifice de sortie et des faces frontales en regard, une face frontale de chaque paire de faces frontales en regard étant formée avec une nervure (140,142,144;240) s'étendant d'une manière sinueuse, comportant des parties de nervure intermédiaires (140) reliées par des ponts (142) à l'endroit du bord d'entrée du disque et par des ponts (144) à l'endroit du bord de sortie du disque, afin de définir un groupe de passages d'écoulement d'entrée (161) communiquant avec l'orifice d'entrée (104) et un groupe de passages d'écoulement de sortie (162) alternant avec les passages d'écoulement d'entrée et communiquant avec l'orifice de sortie (106), et des moyens d'espacement assurant l'espacement de l'autre face frontale de chaque paire de faces frontales en regard par rapport à la nervure (140,142,144;240) s'étendant d'une manière sinueuse, afin de définir des passages de filtration (163) entre chaque paire de faces frontales en regard, caractérisé en ce que les moyens d'espacement comprennent au moins deux nervures additionnelles espacées et continues (151,152,153,251,252) prévues sur l'autre face frontale de chacune des paires de faces frontales en regard, l'une des ces nervures additionnelles (151,152,153;251,252) étant voisine mais espacée du bord d'entrée du disque tandis que l'autre des nervures additionnelles est voisine mais espacée du bord de sortie du disque, la nervure (140,142,144;240) s'étendant d'une manière sinueuse et les nervures additionnelles (151,152,153;251,252) étant très minces et les parties intermédiaires de la nervure s'étendant d'une manière sinueuse recoupant, sensiblement perpendiculairement, les nervures additionnelles, de manière à créer des points de contact notables les unes avec les autres, les espaces entre les nervures additionnelles et les parties intermédiaires de la nervure sinueuse définissant des passages de filtration (163) de très petite aire superficielle ayant une faible sensibilité au colmatage et une capacité élevée de nettoyage sans démontage du filtre, et en ce que les nervures additionnelles (151,152,153;251,252) ont une hauteur notablement plus petite que celle de la nervure (140,142,144;240) s'étendant d'une manière sinueuse, de telle façon que les passages de filtration (163) aient une hauteur notablement plus petite que la hauteur des passages d'écoulement d'entrée et de sortie (161,162), ces passages (161,162) ayant ainsi une capacité élevée en ce qui concerne la retenue de la poussière.

2. Filtre suivant la revendication 1 caractérisé en ce que les nervures additionnelles (151,152,153;251,252) sont espacées les unes des autres d'une distance notablement plus grande que l'espacement des parties de nervure intermédiaires (140) les unes des autres, de telle façon que la longueur de chacun des passages de filtration (163) soit notablement plus grande que sa largeur.

3. Filtre suivant la revendication 2 caractérisé en ce que les disques (114,214,215,314) les nervures additionnelles (151,152,153;251,252) présentes sur ces disques ont tous une forme annulaire, les parties intermédiaires de la nervure (140) s'étendant dans la direction radiale du disque respectif et les ponts (142,144) s'étendant dans la direction circonférentielle du disque respectif.

4. Filtre suivant l'une quelconque des revendications 1 à 3 caractérisé en ce que chacun des disques (114) comporte une pluralité de pattes (136,138) faisant saillie à partir d'un bord externe (132) de ce disque et formées avec des bossages (136') et des creux (138') complémentaires, de manière à permettre à une pluralité de disques (114) d'être assemblés sous la forme d'une pile en insérant les bossages (136') d'un disque (114) dans les creux (138') du disque immédiatement adjacent (114).

5. Filtre suivant l'une quelconque des revendications 1 à 4 caractérisé en ce que tous les disques (114,314) de la pile sont d'une construction identique, chaque disque étant formé avec la nervure (140,142,144), s'étendant d'une manière sinueuse, sur l'une de ses faces et avec la pluralité de nervures additionnelles (151,152,153) faisant saillie à partir de la face opposée du disque.

6. Filtre suivant l'une quelconque des revendications 1 à 4 caractérisé en ce que la pile comporte deux types de disques (214,215) alternant les uns avec les autres dans la pile, un type de disques étant des disques de filtre (214) formés avec la nervure (240), s'étendant d'une manière sinueuse, sur leurs deux faces tandis que l'autre type est constitué par des disques entretoises (215) formés avec les nervures additionnelles (251,252) sur leur deux faces.

7. Filtre suivant l'une quelconque des revendications 1 à 6 caractérisé en ce que tous les disques (314) de la pile (310) sont formés avec une ouverture centrale et ils ont une forme convergente à partir de leurs bords externes et en direction de leurs bords internes, ces disques (314) pouvant s'emboîter les uns dans les autres, en augmentant ainsi l'autostabilité de la pile (310) des disques (314) et en augmentant également l'aire des faces en regard entre les disques (314), comparativement à des disques ayant une configuration plane.

8. Filtre suivant la revendication 7 caractérisé en ce que la pile (310) de disques (314) est disposée dans une position verticale pendant l'usage normal du filtre, avec les bords d'entrée des faces en regard des disques (314) situées au-dessus des bords de sortie de ces disques, si bien que les particules de poussière grossières présentes dans le fluide qui sont séparées à l'endroit des bords d'entrée des disques (314), tendent à tomber dans le fond du filtre.

**Patentansprüche**

1. Mehrfachscheibenfluidfilter, umfassend ein Gehäuse (102; 302), das einen Einlaß (104; 304) und einen Auslaß (106; 306) hat, und eine Vielzahl von Scheiben (114; 214, 215; 314), welche in einem Stapel abgestützt sind und Einlaßränder haben, die dem Einlaß zugewandt sind, Auslaßränder, die dem Auslaß zugewandt sind, und sich gegenüberliegende Seitenstirnflächen; wobei eine Seitenstirnfläche jedes Paares von sich gegenüberliegenden Seitenstirnflächen mit einer sich gewunden erstreckenden Rippe (140, 142, 144; 240) ausgebildet ist, die Zwischenrippenteile (140) hat, welche durch Brücken (142) an den Einlaßrändern der Scheibe und durch Brücken (144) an den Auslaßrändern der Scheibe verbunden sind, um eine Gruppe von Einlaßströmungsdurchgängen (161) zu bilden, die mit dem Einlaß (104) in Verbindung stehen, und eine Gruppe von Auslaßströmungsdurchgängen (162), die sich mit den Einlaßströmungsdurchgängen abwechseln und mit dem Auslaß (106) in Verbindung stehen; und eine Abstandseinrichtung, die die andere Seite jedes Paares von sich gegenüberliegenden Seitenstirnflächen auf Abstand von der sich gewunden erstreckenden Rippe (140, 142, 144; 240) hält, um Filterdurchgänge (163) zwischen jedem Paar von sich gegenüberliegenden Seitenstirnflächen zu bilden; dadurch gekennzeichnet, daß die Abstandseinrichtung wenigstens zwei beabstandete, kontinuierliche, weitere Rippen (151, 152, 153; 251, 252) umfaßt, welche an der anderen Seitenstirnfläche jedes Paares sich gegenüberliegender Seitenstirnflächen vorgesehen sind; wobei eine der weiteren Rippen (151, 152, 153; 251, 252) benachbart zu, aber beabstandet von dem Einlaßrand der Scheibe angeordnet ist, und wobei die andere der weiteren Rippen benachbart zu, aber beabstandet von dem Auslaßrand der Scheibe angeordnet ist; wobei die sich gewunden erstreckende Rippe (140, 142, 144, 240) und die weiteren Rippen (151, 152, 153; 251, 252) sehr dünn sind und die Zwischenteile der sich gewunden erstreckenden Rippe die weiteren Rippen im wesentlichen rechtwinkelig kreuzen, um so im wesentlichen Punktkontakte miteinander zu bilden; wobei die Zwischenräume zwischen den weiteren Rippen und den Zwischenteilen der gewundenen Rippe Filterdurchgangswege (163) von sehr geringem Oberflächeninhalt bilden, welche eine geringe Empfindlichkeit für Verstopfung haben, ohne Auseinanderbauen des Filters sehr leicht zu reinigen sind, und daß die weiteren Rippen (151, 152, 153; 251, 252) eine wesentlich geringere Höhe als die sich gewunden erstreckende Rippe (140, 142, 144; 240) haben, so daß die Filterdurchgangswege (163) eine wesentlich geringere Höhe als die Höhe der Einlaß- und Auslaßströmungsdurchgänge (161, 162) haben, wobei die Durchgänge (161, 162) deshalb eine höhere Schmutzaufnahmekapazität haben.

2. Filter nach Anspruch 1, wobei die weiteren Rippen (151, 152, 153; 251, 252) voneinander einen wesentlich größeren Abstand haben als der Abstand der Zwischenrippenteile (140) voneinander, so daß die Länge jedes Filterdurchgangsweges (163) wesentlich länger als seine Breite ist.

3. Filter nach Anspruch 2, wobei die Scheiben (114, 214, 215, 314) und die weiteren Rippen (151, 152, 153; 251, 252) darauf beide von ringförmiger Gestalt sind, wobei sich die Zwischenrippenteile (140) in radialer Richtung der jeweiligen Scheibe erstrecken und wobei sich die Brücken (142, 144) in Umfangsrichtung der jeweiligen Scheibe erstrecken.

4. Filter nach einem der Ansprüche 1 bis 3, wobei jede der Scheiben (114) eine Vielzahl von Zapfen (136, 138) aufweist, die von einem äußeren Rand (132) derselben vorstehen und mit komplementären Stopfen (136') und Buchsen (138') ausgebildet sind, welche erlauben, eine Vielzahl von Scheiben (114) in einem Stapel zusammenzubauen durch Einsetzen der Stopfen (136') einer Scheibe (114) in die Buchsen (138') der nächsten benachbarten Scheibe (114).

5. Filter nach einem der Ansprüche 1 bis 4, wobei alle Scheiben (114, 314) des Stapels eine identische Konstruktion haben, wobei jede Scheibe mit der sich gewunden erstreckenden Rippe (140, 142, 144) an einer Stirnfläche und mit den mehreren weiteren Rippen (151, 152, 153), welche von der entgegengesetzten Stirnfläche vorstehen, ausgebildet ist.

6. Filter nach einem der Ansprüche 1 bis 4, wobei der Stapel zwei Typen von Scheiben (214, 215) hat, die im Stapel miteinander abwechseln, wobei ein Typ Filterscheiben (214) sind, die mit der sich gewunden erstreckenden Rippe (240) auf ihren beiden Stirnflächen ausgebildet sind und der andere Typ Abstandsscheiben (215) sind, die mit den weiteren Rippen (251, 252) auf ihren beiden Stirnflächen ausgebildet sind.

7. Filter nach einem der Ansprüche 1 bis 6, wobei alle Scheiben (314) des Stapels (310) mit einer zentrischen Öffnung ausgebildet sind und eine sich verjüngende Konfiguration von ihren äußeren Rändern zu ihren inneren Rändern haben, wobei die Scheiben (314) ineinander geschachtelt aufgenommen sind, wodurch die Eigenstabilität des Stapels (310) von Scheiben (314) erhöht wird und ebenso der Flächeninhalt der sich gegenüberstehenden Stirnflächen zwischen den Scheiben (314) verglichen mit Scheiben ebener Konfiguration erhöht wird.

8. Filter nach Anspruch 7, wobei der Stapel (310) von Scheiben (314) während des normalen Gebrauchs des Filters in vertikaler Position angeordnet ist, wobei die Einlaßränder der sich gegenüberstehenden Stirnflächen der Scheiben (314) über ihren Auslaßrändern sind, wodurch grobe Schmutzpartikel in dem Fluid, die an den Einlaßrändern der Scheiben (314) abgeschieden werden, bestrebt sind, auf den Boden des Filters zu fallen.

FIG.1

104

121 116c 126 116e
102 116a
120
128 116
124
108 110
114
129
118
106 112
118a 118c 122

FIG. 10

304

321 316c 326 316e
302 316a
320
328 316
324
308
310
314
330
318
306 312
318a 318c 322

FIG 2a

138
136
114
130
134 161
144
132
136
138
138'
138
136
162
140
142

FIG 2b

114
138
36
136'
136
132
130
152
134 151
153
138
138
136

114a
138' 138
142 163 140
144
130
144
163 140 142 136' 136
136 136'
140
151
140 152 153 138' 138

FIG 3

FIG 4a

116b
116a 116
116c

FIG 5a

118
118b
118a
118c

116
116a
116d 116c
116e

FIG.4b

118
118d 118c
118a

FIG.5b

FIG 7

214

240

242

230

243

234

232

a

a

240

FIG 7a

232

240

FIG 6

216

214

215

214

FIG 8

215

251

252

231

235

233

a

a

261

260

251

240

262

252

FIG 9

233 251 252 231

235

FIG 8a